Europäisches Patentamt

European Patent Office

Office européen des brevets

(11) Publication number: **0 387 695**
**A2**

## (12) EUROPEAN PATENT APPLICATION

(21) Application number: **90104411.5**

(22) Date of filing: **08.03.90**

(51) Int. Cl.5: **F16L 19/00**

(30) Priority: **11.03.89 GB 8905626**

(43) Date of publication of application:
**19.09.90 Bulletin 90/38**

(84) Designated Contracting States:
**AT BE DE ES FR GB IT NL**

(71) Applicant: **IRACROFT LIMITED**
**Blandford Heights Industrial Estate**
**Shaftsbury Lane**
**Blandford Forum Dorset(GB)**

(72) Inventor: **Bamford, David Charles**
**Alanda, The Avenue**
**Porton, Nr. Salisbury, Wiltshire(GB)**

(74) Representative: **Lewis, Samuel Hewitt et al**
**FORRESTER & BOEHMERT**
**Widenmayerstrasse 4/I**
**D-8000 München 22(DE)**

(54) **Providing a threaded connection between two tubes.**

(57) A method of providing a threaded connection between the ends of first and second tubes (10,11), the method comprising deforming the end of the first tube (10) to provide a thickened region (28) and threading the external surface of the thickened region (20), providing an outwardly extending flange (24) at the end of the second tube (11), so that an inwardly extending shoulder (26) of the female threaded element (25) engages the flange (24) and screwing the female threaded element (25) onto the male threaded end (14) of the first tube (10).

FIG 1

EP 0 387 695 A2

## Providing a threaded connection between two tubes

Description of Invention

This invention relates to a method of providing a threaded connection between two tubes.

Currently, in order to provide a fluid-tight, threaded connection between the plain ends of two tubes without providing any restriction to fluid flow, it is necessary to secure to the end of one tube, usually by welding or brazing, a fitting comprising a male threaded tube part, and to secure to the end of the other tube, a fitting comprising an outwardly extending flange with which an inwardly extending shoulder of a female threaded nut can engage, and to screw the nut onto the male threaded tube part with an "O" ring or other sealing member between end faces provided by each of the male threaded fitting and flange fitting. In this way, by ensuring that the male threaded fitting has a passage diameter of not less than the bore of the tube to which it is secured, and similarly by ensuring that the flange fitting does not reduce the cross section of the bore in the other tube, the connection provides no restriction to fluid flow.

However to provide a threaded connection in this way is labour intensive and requires the provision of special fittings.

According to one aspect of the present invention we provide a method of·providing a threaded connection between the ends of first and second tubes, the method comprising deforming the end of the first tube to provide a thickened region and threading the external surface of the thickened region, providing an outwardly extending flange at the end of the second tube, receiving a female threaded element over the end of the second tube so that an inwardly extending shoulder of the female threaded element engages the flange and screwing the female threaded element onto the male threaded end of the first tube.

Thus there is no need to attach a fitting having a male threaded tube part to the end of the first tube.

According to a second aspect of the invention we provide a method of providing a threaded connection between the ends of two tubes, the method including the steps of deforming the end of one tube to provide a thickened region comprising a flange which cooperates with an inwardly extending shoulder of a female threaded element received on the end of the tube, providing a male thread at the end of the other tube and screwing the female threaded element onto the male threaded end of the other tube.

The invention will now be described with reference to the accompanying drawings in which:

FIGURE 1 is a side view partly in cross section of a threaded connection between the ends of the first and second tubes provided by a prior art method.

FIGURE 2 is a view similar to Figure 1 but showing a flange provided on the end of a tube by the method in accordance with the second aspect of the invention.

FIGURE 3 is a view similar to Figure 2 but also showing a male thread provided on the end of the other tube by a method in accordance with the first aspect of the invention.

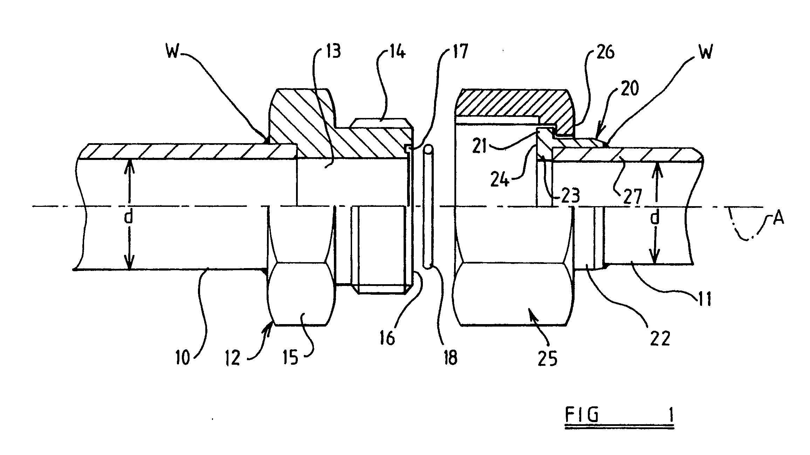

Referring first to Figure 1, a threaded connection between the plain ends of the first and second tubes 10, 11 is provided by securing to the end of one tube 10 by welding as indicated at W, a fitting 12 comprising a passageway 13 which is not smaller than the bore diameter "d" of the tube 10. The fitting 12 further comprises a male threaded tube part 14, and a body part 15 the external surface of which is of hexagonal configuration to receive a spanner.

An end face 16 of the tube end 10 is provided with a recess 17 to receive a sealing member 18 which in the present example comprises an "O" ring.

A flange is provided on the end of the second tube 11 by a second fitting 20 which is again welded or brazed as indicated at W, to the tube end 11. The fitting 20 has a flange part 21, a socket part 22 to receive the end 11 of the second tube, and an inwardly extending part 23. The fitting 20 provides an end face 24 to cooperate with the end face 16 of the fitting 12 to deform the sealing member 18 therebetween in order to provide a fluid tight seal.

A female threaded element comprising a nut 25 with an inwardly extending shoulder 26 is received on the end of the tube 11, the shoulder 26 cooperating with the outwardly extending figure 21 to prevent the nut 25 disengaging the tube end 11.

To provide the threaded connection, the nut 25 which is free to rotate relative to the flange 21, is screwed onto the male threaded tube part 14 of the fitting 12 with the "O" ring seal 18 in place. Thus a fluid tight seal is provided by a threaded connection between the plain ends of the two tubes 10 and 11.

By ensuring that the internal diameter of the tube part 14 of fitting 12 is not less than the internal diameter "d" of the tube 10, and by ensuring that the fitting 20 does not extend inwardly of an internal surface 27 of the tube end 11, no restriction is provided by the connection to fluid flow. However such a method is labour intensive and requires the provision of the special fittings 12 and 20.

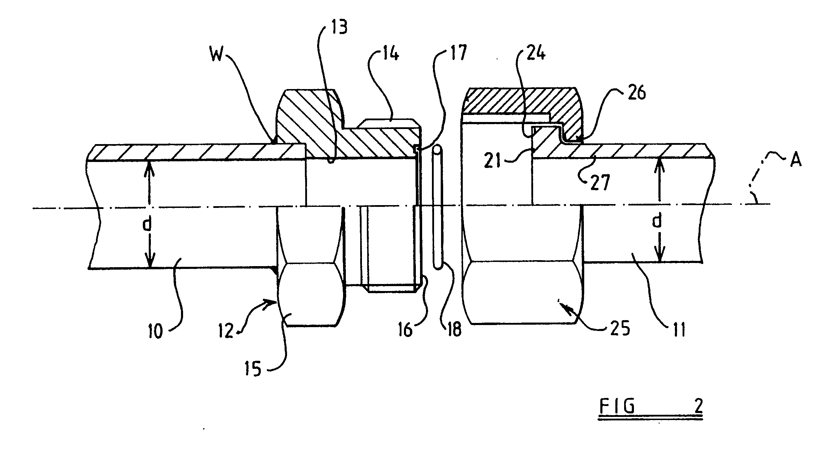

Referring to Figure 2 a threaded connection is provided in which the special fitting 20 is not required.

The end of the tube 11 has been provided with a thickened region by deforming the end of the tube 11 outwardly to provide a flange 21.

Preferably this is accomplished by inserting a former into the end of the tube 11, and striking the end of the tube 11 once or repeatedly as necessary. During the deformation process, an end face 24 is provided on the tube 11, which preferably is generally perpendicular to the longitudinal extent of the tube 11. If required, an annular recess may also be provided during the deforming process, to receive the sealing member 18. Alternatively, a recess could be machined in the end 24 of the thickened region of the tube 11 subsequent to deforming the end of the tube 11 as described.

By inserting a former into the end of the tube 11, it can be seen that the end is only deformed outwardly, not inwardly of the inner tube surface 27 and hence the deformed end provides no restriction to fluid flow through the tube 11 or the coupling.

The former may comprise part of a striking tool, or may be separate therefrom as desired.

The threaded connection is completed in this example, by providing a fitting 12 on the end of the tube 10 as previously described, and screwing the nut 25, which is received on the end of the tube 11 as shown, onto the male threaded tube part 14 of the fitting 12, with the "O" ring 18 therebetween. In this example, the end 24 of the end 11 is plain, and a a recess 17 is provided in the end face 16 of the fitting 12. The nut 25 has a shoulder 26 which cooperates with the flange 21.

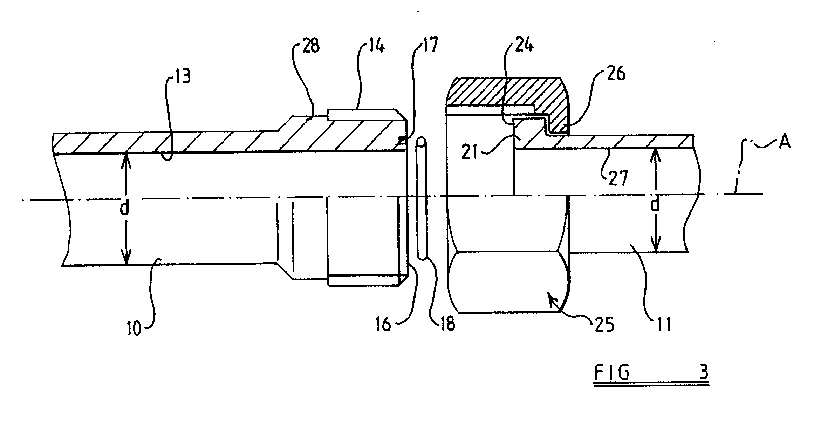

Referring now to Figure 3, a threaded connection between the ends of two tubes 10 and 11 is shown in which neither the flange fitting 20 or fitting 12 is required.

In this case, the end of tube 10 has been deformed outwardly to provide an outwardly extending thickened region 28 integral with the end of the tube 10.

Again this may be accomplished by inserting a former into the end of the tube 10 and striking the end of the tube 10 once or repeatedly until a region 28 of a desired outward and longitudinal extent is provided. Next the thickened region 28 is provided with a male thread as indicated at 14. During the deformation process, an end face 16 is preferably provided on the end of the tube 10 which is generally perpendicular to the longitudinal extent of the tube 11. If desired, a recess 17 may be provided in the end face 16 to receive the "O" ring or other sealing member 18, but if this is already provided in the end face of the other tube 11, such recess may not be required.

It has been found that by repeatedly striking the end of the tube 10 as described, the external surface of the deformed thickened region is provided with ridges or folds but even though these ridges may be deeper than the male thread 14 subsequently provided, the ridges do not interfere with the co-operation of the male thread 14 with the nut 25 received on the end of the second tube 11.

The end of the tube 11 is provided with a flange 21 as described above with reference to figure 2, by deforming the end of the tube 11 outwardly.

To complete the coupling, the nut 25 received on the end of the tube 11 is screwed on to the male thread 14, with the sealing member 18 between the end faces 16,24.

It is envisaged that by providing end faces 16 and 24 which when the nut 25 is screwed onto the male thread 14 of the tube end 10 can provide sufficient fluid tightness between the tube ends, the seal 18 and recess 17 may be dispensed with if required.

## Claims

1. A method of providing a threaded connection between the ends of first and second (10,11) tubes, the method comprising deforming the end of the first tube (10) to provide a thickened region (28) and threading the external surface of the thickened region (28), providing an outwardly extending flange (21) at the end of the second tube (11), receiving a female threaded element (25) over the end of the second tube (11) so that an inwardly extending shoulder (26) of the female threaded element (25) engages the flange (21) and screwing the female threaded element (25) onto the male threaded end (14) of the first tube (10).

2. A method according to claim 1 characterised in that the end of the first tube (10) is deformed by inserting a former into the end and striking the end of the tube (10) once or repeatedly so as to provide the thickened outwardly extending region (28) at the one end of the tube (10).

3. A method according to claim 1 or claim 2 characterised in that during the deforming method step, and end face (16) is provided at the end of the first tube (10) which is generally perpendicular to the longitudinal extent of the first tube (10).

4. A method according to claim 3 characterised in that the end face (16) is provided with an annular recess (17) during the deforming method step, or subsequently by machining, to receive a sealing member (18).

5. A method according to any one of claims 1 to 4 characterised in that the outwardly extending flange (21) is provided on the end of the second tube (11) by deforming the end of the second tube to provide a thickened region.

6. A method according to claim 5 characterised in that the thickened region of the second tube (11) is provided by inserting a former into the end of the second tube (11) and striking the end of the second tube (11) once or repeatedly.

7. A method according to claim 5 or claim 6 characterised in that the second tube (11) is provided during the deforming method step with an end face (24) generally perpendicular to the longitudinal extent of the second tube (11).

8. A method of providing a threaded connection between the ends of two tubes (10,11), the method including the steps of deforming the end of one tube (11) to provide a thickened region comprising a flange (24) which cooperates with an inwardly extending shoulder (26) of a female threaded element (25) received on the end of the tube (11), providing a male thread (14) at the end of the other tube (10) and screwing the female threaded element (25) onto the male threaded end (14) of the other tube (10).

9. A method according to claim 8 characterised in that the male thread (14) is provided on the end of the other tube (10) by deforming the end of the other tube (10) to provide a thickened region, and providing a male thread on the thickened region of the other tube (10).

10. A method according to claim 8 or claim 9 which includes any of the features of the method of any one of claims 1 to 7.

11. A method according to any one of the preceding claims characterised in that the end of the or each respective (10, 11) tube is deformed outwardly only, during the deforming method step, so that the bores (13,27) of the tubes (10,11) are not restricted.

FIG 1

EP 0 387 695 A2

FIG 2

FIG 3

EP 0 387 695 A2